# EUROPÄISCHE PATENTANMELDUNG

(11) **EP 1 878 932 A2**
(43) Veröffentlichungstag der Anmeldung: **16.01.2008**
(21) Anmeldenummer: 07111373.2
(22) Anmeldetag: 29.06.2007
(51) Int. Cl.: F16D 25/06, F16D 25/12

(54) **Einrichtung zur Erfassung der Wegposition eines Kupplungskolbens**

(30) Priorität: 15.07.2006 DE 102006032916
(71) Anmelder: ZF Friedrichshafen AG, 88038 Friedrichshafen (DE)
(72) Erfinder: Ronge, Ludger, 88097 Eriskirch (DE); Bader, Josef, 88045 Friedrichshafen (DE); Birkenmaier, Gerhard, 88069 Tettnang-Walchesreute (DE); Graf, Andreas, 78333 Stockach - Wahlwies (DE); Heinzelmann, Karl-Fritz, 88074 Meckenbeuren (DE); König, Hubert, 88074 Meckenbeuren (DE); Vetter, Manfred, 88048 Friedrichshafen (DE); Höring, Gerhard, 88709, Hagnau (DE); Schuh, Henrik, 88045 Friedrichshafen (DE); Führer, Kim, 88131 Lindau (DE); Ulbricht, Markus, 88069 Tettnang (DE); Steinborn, Mario, 88046 Friedrichshafen (DE); Heinrich, Kai, 88289 Waldburg (DE); Gessler, Frank, 88287 Grünkraut (DE); Wöhr, Klaus, 88074 Meckenbeuren (DE); Walter, Bernhard, 88048 Friedrichshafen (DE)

(57) **Zusammenfassung**

Es wird eine Einrichtung zur Erfassung der Wegposition eines Kupplungskolbens zur Kupplungsbetätigung, der in einer rotierenden Kupplung axial verschiebbar angeordnet ist, vorgeschlagen, bei der die Erfassung der Wegposition des Kupplungskolbens berührungslos erfolgt, wobei die Einrichtung zur Erfassung der Wegposition einen an einem in Umfangsrichtung begrenzten Bereich des Umfangs des inneren Durchmessers des Kolbens (4) angeordneten Magneten (11) aufweist, wobei der Kolben (4) gegen Verdrehung relativ zum Sensor gesichert ist, und wobei die axiale Position des Magneten (11) bzw, des Kolbens (4) von einem außerhalb der Kupplung angeordneten Sensor (12) erfassbar ist.

## Beschreibung

Die Erfindung betrifft eine Einrichtung zur Erfassung der Wegposition eines Kupplungskolbens zur Kupplungsbetätigung, der in einer rotierenden Kupplung angeordnet ist, gemäß dem Oberbegriff des Patentanspruchs 1.

Aus der DE 10 2004 027 117 A1 der Anmelderin ist eine Einrichtung zur Erfassung der Wegposition eines in einer rotierenden Kupplung axial verschiebbar angeordneten Kupplungskolbens zur Kupplungsbetätigung bekannt, bei der die Erfassung der Wegposition des Kupplungskolbens berührungslos erfolgt.

Hierbei umfasst die Sensoreinrichtung zur Erfassung der Wegposition des Kupplungskolbens einen Ringmagneten, der vorzugsweise im inneren Durchmesser des Kolbens bzw. beim zentralen Kupplungsausrücker angeordnet ist und einen im bzw. am Getriebegehäuse angeordneten Sensor zur Erfassung der Lage des Ringmagneten. Die notwendige Elektronik kann ebenfalls im bzw. am Getriebegehäuse angeordnet sein. Der Sensor ist vorzugsweise als induktiver Sensor ausgebildet und erfasst die axiale Stellung des Ringmagneten und somit des Kolbens.

Der vorliegenden Erfindung liegt die Aufgabe zugrunde, ausgehend von dem genannten Stand der Technik, eine Einrichtung zur Erfassung der Wegposition eines Kupplungskolbens zur Kupplungsbetätigung, der in einer rotierenden Kupplung angeordnet ist, anzugeben, bei der die Herstellungskosten reduziert werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach umfasst die Einrichtung zur Erfassung der Wegposition des Kupplungskolbens einen Magneten, der vorzugsweise im inneren Durchmesser des Kolbens bzw. beim zentralen Kupplungsausrücker angeordnet ist, und einen im bzw. am Getriebegehäuse angeordneten Sensor zur Erfassung der Lage des Magneten, wobei der Magnet an einem in Umfangsrichtung begrenzten Bereich des Umfanges des inneren Durchmessers des Kolbens angeordnet ist, und wobei der Kolben gegen Verdrehung relativ zum Sensor gesichert ist.

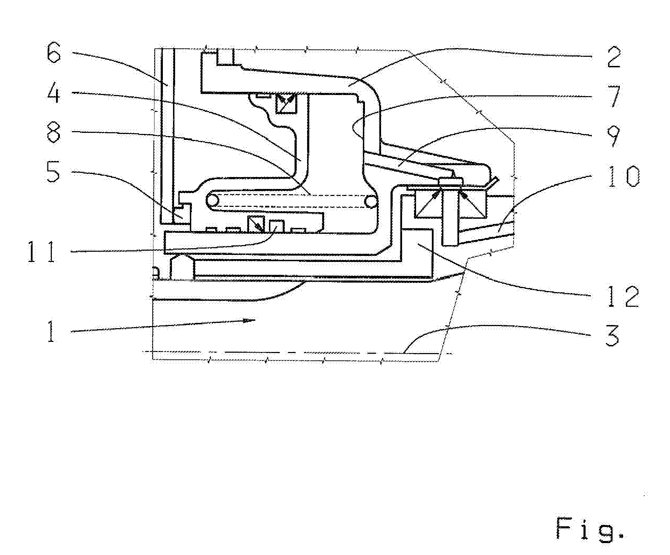

Die Erfindung wird im Folgenden anhand der beigefügten Figur, welche eine schematische Schnittansicht eines für die Erfindung relevanten Teils einer eine erfindungsgemäße Sensoreinrichtung aufweisenden Reibungskupplung darstellt, beispielhaft näher erläutert.

In der Figur ist mit 1 die Eingangswelle des Getriebes bezeichnet; ferner ist mit 2 ein Zylinder bezeichnet, welcher einen Teil des Gehäuses der Kupplung bildet, dessen Zylinderwand in etwa parallel zur Eingangswelle 1 verläuft, wobei innerhalb des Zylinders 2 ein axial entlang der Rotationsachse 3 der Kupplung verschiebbarer Kolben 4 angeordnet ist. Der Kolben 4 weist einen Vorsprung 5 auf, der mit einer Membranfeder 6 zusammenwirkt, Ferner ist zwischen dem Kolben 4 und dem Zylinderboden 7 eine Feder 8 angeordnet, die den Kolben 4 vom Zylinderboden 7 wegdrückt und in seiner Ruheposition im unbetätigten Zustand hält.

Der Kolben 4 wird dadurch betätigt und nach links bewegt, indem über eine Durchlassleitung 9 und eine Verbindungsleitung 10 zum Getriebe Betätigungsmittel von einem nicht dargestellten Vorratsbehälter in den Raum zwischen dem Kolben 4 und den Zylinderboden 7 zugeführt wird.

Gemäß der Erfindung ist zur Erfassung der Wegposition des mit der Kupplung rotierenden Kolbens 4 eine Sensoreinrichtung vorgesehen, welche einen Magneten 11 und einen Sensor 12 umfasst, wobei der Magnet 11 an einem in Umfangsrichtung begrenzten Bereich des Umfangs des inneren Durchmessers des Kolbens 4 angeordnet ist, und wobei der Kolben 4 gegen Verdrehung relativ zum Sensor gesichert ist. Die Verdrehsicherung wird durch ein hier nicht gezeigtes Mittel erzielt, das geeignet ist, die Verdrehung des Kolbens 4 relativ zum Sensor 12 zu begrenzen. Der Sensor 12 ist zwischen der Antriebswelle 1 und der Zylinderwand angeordnet und erfasst die Position des Magneten 11 und somit die Position des Kolbens 4 innerhalb des Zylinders 2.

Als Sensor 12 ist vorzugsweise ein induktiver Sensor vorgesehen, welcher durch das üblicherweise aus Aluminium hergestellte Gehäuse die Lage des Magneten 11 erfassen kann. In Abhängigkeit von der Gehäusezusammensetzung kann anstelle des Magneten 11 ein weiteres Element vorgesehen sein, beispielsweise ein Bauteil aus Edelmetall. Der Sensor 12 kann im bzw. am Gehäuse des Getriebes angeordnet sein.

Selbstverständlich fällt auch jede konstruktive Ausbildung, insbesondere jede räumliche Anordnung, sowie jede Ausgestaltung der Sensoreinrichtung in Abhängigkeit von den Materialien, durch die die Lage des Kolbens berührungslos erfasst werden soll, unter den Schutzumfang der vorliegenden Ansprüche, ohne die Funktion der Sensoreinrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Eingangswelle
- 2: Zylinder
- 3: Rotationsachse der Kupplung
- 4: Kolben
- 5: Vorsprung
- 6: Membranfeder
- 7: Zylinderboden
- 8: Feder
- 9: Durchlassleitung
- 10: Verbindungsleitung
- 11: Magnet
- 12: Sensor

## Patentansprüche

1. Einrichtung zur Erfassung der Wegposition eines Kupplungskolbens (4) zur Kupplungsbetätigung, der in einer rotierenden Kupplung axial verschiebbar angeordnet ist, bei der die Erfassung der Wegposition des Kupplungskolbens (4) berührungslos erfolgt, **dadurch gekennzeichnet, dass** sie einen an einem in Umfangsrichtung begrenzten Bereich des Umfangs des inneren Durchmessers des Kolbens (4) angeordneten Magneten (11) aufweist, wobei der Kolben (4) gegen Verdrehung relativ zu einem Sensor gesichert ist, und wobei die axiale Position des Magneten (11) bzw. des Kolbens (4) von dem außerhalb der Kupplung angeordneten Sensor (12) erfassbar ist.

2. Einrichtung nach Anspruch 1, **dadurch gekennzeichnet dass** der Sensor (12) im bzw. am Gehäuse des Getriebes angeordnet ist

3. Einrichtung nach Anspruche 1 oder 2, **dadurch gekennzeichnet, dass** der Sensor (12) als induktiver Sensor ausgebildet ist.
